**Europäisches Patentamt**

**European Patent Office**

**Office européen des brevets**

(19)

(11) Veröffentlichungsnummer : **0 371 198 B1**

(12)
# EUROPÄISCHE PATENTSCHRIFT

(45) Veröffentlichungstag der Patentschrift :
04.03.92 Patentblatt 92/10

(51) Int. Cl.⁵ : **G01B 21/02**

(21) Anmeldenummer : **89113326.6**

(22) Anmeldetag : **20.07.89**

(54) Gekapselte Positionsmesseinrichtung.

(30) Priorität : **30.09.88 DE 3833189**
**10.12.88 DE 3841721**

(43) Veröffentlichungstag der Anmeldung :
**06.06.90 Patentblatt 90/23**

(45) Bekanntmachung des Hinweises auf die
Patenterteilung :
**04.03.92 Patentblatt 92/10**

(84) Benannte Vertragsstaaten :
**DE FR GB IT**

(56) Entgegenhaltungen :
**DE-A- 1 773 403**
**DE-A- 3 429 684**
**GB-A- 1 535 056**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Kraus, Heinz**
**Traunring 74e**
**W-8225 Traunreut (DE)**

EP 0 371 198 B1

## Beschreibung

Die Erfindung bezieht sich auf eine gekapselte, Positionsmeßeinrichtung nach dem Oberbegriff des Anspruches 1.

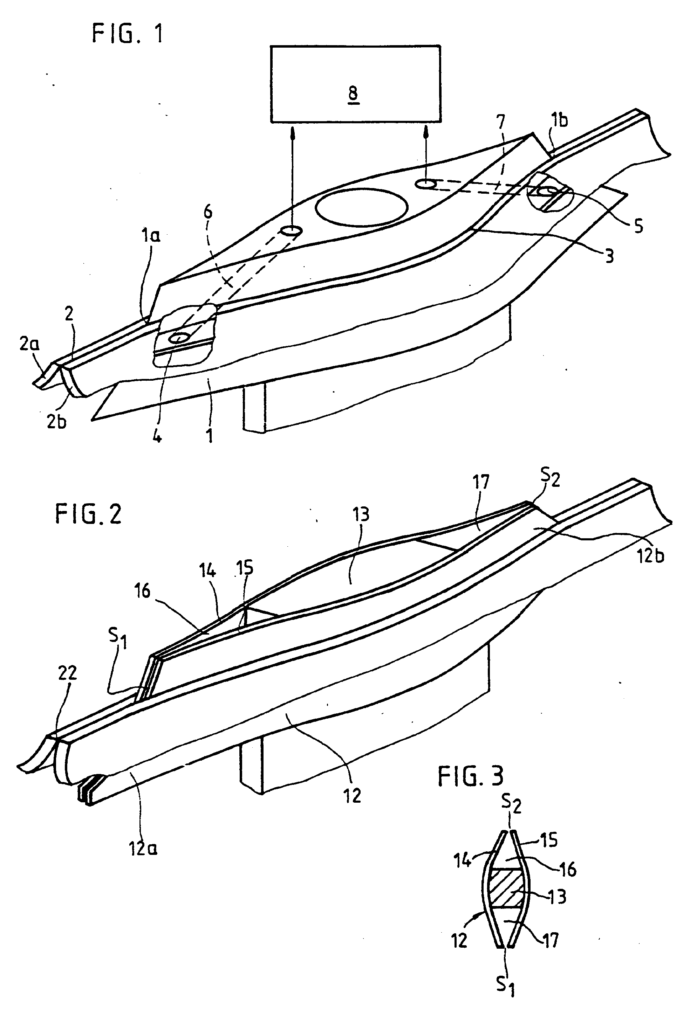

Eine derartige Meßeinrichtung ist beispielsweise aus der DE-A1-17 73 403 bekannt. Dort wird ein in einem Hohlkörper angeordneter Maßstab mittels einer Abtasteinrichtung fotoelektrisch abgetastet. Der Hohlkörper ist dabei an einem der Maschinen-Bauteile angebracht, deren Relativbewegung gemessen werden soll. Über einen Mitnehmer mit etwa schwertförmigem Querschnitt ist die Abtasteinrichtung mit dem anderen der zu messenden Maschinen-Bauteile verbunden. Die erforderlichen Leitungen zur Versorgung der Beleuchtung und zur Ausleitung der gewonnenen Meßsignale werden als Kabelstrang durch einen Schlitz im Mitnehmer aus der Meßeinrichtung herausgeführt (dort Figur 3). Der Querschnitt bzw. die Dicke des Mitnehmers ist aus diesem Grunde nur in beschränktem Maße verringerbar. Um jedoch die den Längsschlitz des Hohlprofiles abdichtenden dachförmigen Dichtlippen möglichst wenig zu spreizen, wird immer ein Mitnehmer möglichst kleinen Querschnitts bzw. kleiner Dicke angestrebt. Aus den vorstehenden Gründen sind diesen Bestrebungen jedoch Grenzen gesetzt.

Durch die unvermeidliche Aufspreizung entstehen an den schneidenartig zusammenlaufenden Stirnseiten des Mitnehmers immer kleinste Lecks, die die Abdichtung verschlechtern. Durch diese Lecks können kleine Fremdkörper, schädliche Flüssigkeiten und Gase ins Innere der Meßeinrichtung eindringen, was zu Störungen des Meßbetriebes führen kann.

Aus der Literatur sind bereits zahlreiche Lösungsvorschläge bekannt, wie diese Störungen zumindest reduziert werden können. Zu diesen Vorschlägen gehört auch das ständige Spülen des Hohlkörpers mit sauberer Druckluft die an den vorgenannten Lecks wieder austritt, und so das Eindringen von Schmutzpartikeln verhindert. Diese Maßnahme ist zwar hinreichend wirkungsvoll, jedoch ist die Erzeugung von sauberer - auch ölfreier - Druckluft im Dauerbetrieb sehr aufwendig.

Aus der Druckschrift GB-A-1 535 056 ist es bekannt, zur Vermeidung von Fluktuationen des Brechungsindex der Luft bei gekapselten Positionsmeßeinrichtung einen Holkörper zu evakuieren, in dem sich ein bezüglich des Hohlkörpers bewegliches Element (z.b. der Reflektor eines Leserinterferometers) befindet.

Der Erfindung liegt die Aufgabe zugrunde, eine störungsunanfällige Positionsmeßeinrichtung zu schaffen, deren Aufbau und Betrieb weniger aufwendig ist, als dies beim Stand der Technik der Fall ist.

Diese Aufgabe wird von einer Positionsmeßeinrichtung mit den Merkmalen des Anspruches 1 gelöst.

Die Vorteile der erfindungsgemäßen Positionsmeßeinrichtung liegen darin, daß mit einfachen Mitteln eine gute Abdichtung und eine hohe Zuverlässigkeit im Dauerbetrieb erreicht wird. Mit den Merkmalen der Abhängigen Ansprüche wird die Erfindung in vorteilhafter Weise ausgestaltet.

Anhand der Zeichnungen soll die Erfindung mit Hilfe von Ausführungsbeispielen noch näher erläutert werden.

Es zeigt:
Figur 1 einen Mitnehmer,
Figur 2 eine Variante eines Mitnehmers,
Figur 3 eine stark schematisierte Draufsicht des Mitnehmers gemäß Figur 2,
Figur 4 eine Positionsmeßeinrichtung und
Figur 5 eine Variante einer Positionsmeßeinrichtung.

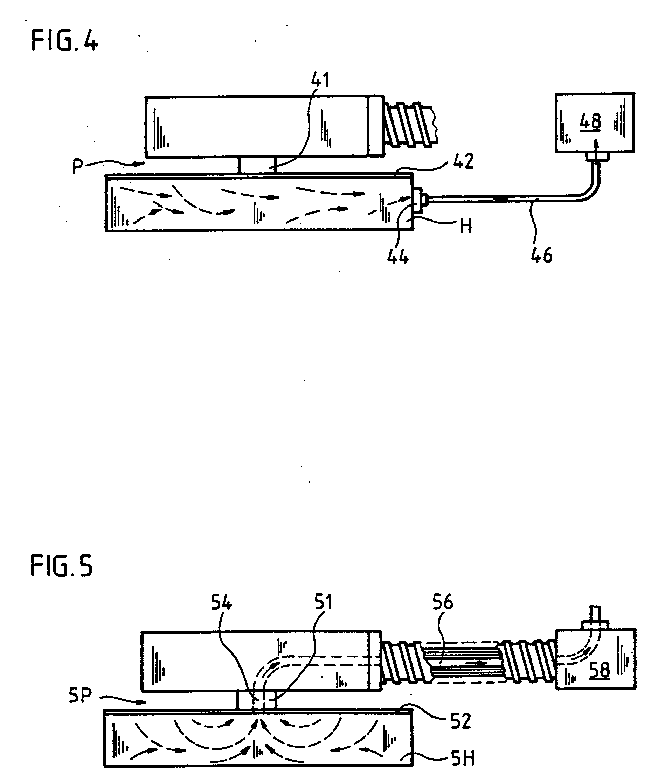

Ein in Figur 1 dargestellter Mitnehmer 1 ist Bestandteil einer Positionsmeßeinrichtung, wie sie im eingangs genannten Stand der Technik ausführlich beschrieben und in den Figuren 4 und 5 schematisch gezeigt ist. Die Positionsmeßeinrichtung wird hier nicht näher beschrieben da ihre weiteren Bestandteile - außer dem Hohlkörper - zum Verständnis der Erfindung nichts beitragen können. Lediglich ein Dichtlippenpaar 2, das mit dem Mitnehmer 1 in bekannter Weise zusammenwirkt, ist angedeutet.

Der Mitnehmer 1 durchragt das Dichtlippenpaar 2, das von ihm örtlich aufgespreizt wird. Die Dichtlippen 2a und 2b schmiegen sich an den Mitnehmer 1 abdichtend an, aber im Bereich seiner schneidenartig zusammenlaufenden Stirnseiten 1a und 1b bilden sich kleine Aufspreizungen, die Lecks in der Abdichtung darstellen. Obwohl die Form des Mitnehmers 1 optimiert und auf die Eigenschaften des Dichtlippenpaares 2 abgestimmt ist, sind diese Aufspreizungen nicht ganz zu vermeiden.

Durch die so entstehenden Lecks dringt Schmutz und/oder kontaminierte Flüssigkeit ins Innere der Meßeinrichtung ein:

Unterhalb der durch das Dichtlippenpaar 2 gebildeten Abdecklinie 3 befinden sich an den Stirnseiten 1a und 1b des Mitnehmers 1 kleine Bohrungen 4 und 5. Über Kanäle 6 und 7 sind die Bohrungen 4 und 5 mit einer Unterdruckquelle 8 verbunden. Aufgrund des Unterdruckes wird die an den Lecks eindringende Materie sofort abgesaugt, so daß das Innere der Meßeinrichtung nicht verschmutzen kann. Durch das Vakuum wird das Dichtlippenpaar 2 auch noch besser am Mitnehmer 1 anliegen, da ein gewisser Ansaugeffekt auftritt. Das Leck wird

2

so im Querschnitt verkleinert.

In Figur 2 und 3 ist eine Variante eines Mitnehmers 12 gezeigt, der zweischalig aufgebaut ist. Der Mitnehmer 12 ist dem Aufspreizverhalten des Dichtlippenpaares 22 in gleicher Weise angepaßt, wie die Variante aus Figur 1.

Da die perspektivische Darstellung den erfindungsgemäßen Aufbau nicht sehr deutlich werden läßt, ist in Figur 3 stark vereinfacht eine Draufsicht in kleinerem Maßstab dargestellt.

Zwei dünnwandige Halbschalen 14 und 15 umschließen einen starren Kern 13, sodaß näherungsweise der Querschnitt eines zweiseitigen Schwertes gebildet wird. Die beiden Halbschalen 14 und 15 laufen stirnseitig schneidenartig zusammen, aber es bleibt ein schmaler Spalt $S_1$ und $S_2$ auf jeder Stirnseite bestehen. Die Spalte $S_1$ und $S_2$ bilden die Absaugöffnungen, indem sie in Kammern 16, 17 münden, die an eine nicht dargestellte Unterdruckquelle angeschlossen sind, wie bereits zur Figur 1 beschrieben wurde.

Die zweischalige Ausführungsform gemäß der Figuren 2 und 3 hat fertigungstechnische Vorteile, wobei die Spaltbreite sehr einfach eingestellt werden kann.

In Figur 4 ist schematisch eine Positionsmeßeinrichtung P dargestellt, bei der ein Hohlkörper H über Leitungen 46 mit einer Unterdruckquelle 48 verbunden ist. Dazu weist der Hohlkörper H wenigstens eine Absaugöffnung 44 auf. Durch das Druckgefälle zum Umgebungs-Luftdruck wird der Abdichtungseffekt noch verstärkt, wie bereits zu Figur 1 beschrieben wurde.

In Figur 5 ist schematisch eine Positionsmeßeinrichtung 5P dargestellt, die eine komplette Einheit mit Absaugung durch den Mitnehmer 51 gemäß der Ausführungsbeispiele aus den Figuren 1 oder 2 zeigt.

In den Figuren 4 und 5 sind gleichartige Elemente mit gleichen Bezugszeichen versehen, denen als Index-Ziffer die Figurennummer voran gestellt wurde.

An die Unterdruckquelle sind deutlich geringere Anforderungen zu stellen, als an eine eingangs erwähnte Quelle für saubere und trockene Druckluft.

**Patentansprüche**

1. Gekapselte Positionsmeßeinrichtung zum Messen der Lage zweier relativ zueinander beweglicher Objekte mit einem einen Maßstab tragenden, längsseitig geschlitzten, mit Dichtelementen abgedichteten Hohlkörper und einer den Maßstab abtastenden Abtasteinrichtung, wobei der Hohlkörper an einem der relativ zueinander beweglichen Objekte befestigt ist, und die Abtasteinrichtung mit Hilfe eines den Längsschlitz durchgreifenden schwertartigen Mitnehmers am anderen Objekt angebracht ist, dadurch gekennzeichnet, daß der Hohlkörper (H) mit Unterdruck beaufschlagt ist.

2. Gekapselte Positionsmeßeinrichtung nach Anspruch 1, dadurch gekennzeichnet, daß der Hohlkörper (H) wenigstens eine Absaugöffnung (44) aufweist, die über Leitungen (46) mit einer Unterdruckquelle (48) verbunden ist.

3. Gekapselte Positionsmeßeinrichtung nach Anspruch 1, dadurch gekennzeichnet, daß der Mitnehmer (1, 12) an seinen schneidenartigen zusammenlaufenden Stirnseiten (1a, 1b; 12a, 12b) Absaug-Öffnungen (4, 5; $S_1$, $S_2$) aufweist.

4. Gekapselte Positionsmeßeinrichtung nach Anspruch 3, dadurch gekennzeichnet, daß die Absaug-Öffnungen (4, 5; $S_1$, $S_2$) des Mitnehmers (1, 12) über Kanäle (6, 7; 16, 17) mit einer Unterdruckquelle (8) verbunden sind.

5. Gekapselte Positionsmeßeinrichtung nach Anspruch 3, dadurch gekennzeichnet, daß der Mitnehmer (12) aus mindestens zwei Platten (14, 15) besteht, durch die an den schneidenartig zusammenlaufenden Stirnseiten (12a, 12b) Spalte ($S_1$, $S_2$) gebildet werden.

**Claims**

1. Encapsulated position measuring device for measuring the position of two objects movable relative to one another, with a longitudinally slotted hollow body carrying a measuring scale and sealed by sealing elements and a sensing device sensing the measuring scale, wherein the hollow body is fixed to one of the objects movable relative to one another and the sensing device is fitted to the other object with the aid of a sword-like follower engaging through the longitudinal slot, characterized in that the hollow body (H) is subjected to a partial vacuum.

2. Encapsulated position measuring device according to claim 1, characterized in that the hollow body (H) has at least one suction opening (44), which is connected by lines (46) to a vacuum source (48).

3. Encapsulated position measuring device according to claim 1, characterized in that the follower (1, 12)

3

has suction openings (4, 5; $S_1$, $S_2$) at its faces (1a, 1b; 12a, 12b) converging like a sword.

4. Encapsulated position measuring device according to claim 3, characterized in that the suction openings (4, 5; $S_1$, $S_2$) of the follower (1, 12) are connected to a vacuum source (8) by channels (6, 7; 16, 17).

5. Encapsulated position measuring device according to claim 3, characterized in that the follower (12) consists of at least two plates (14, 15), through which gaps ($S_1$, $S_2$) are formed at the faces (12a, 12b) converging like a sword.

**Revendications**

1. Dispositif de mesure de position étanche pour la mesure de la position relative de deux objets pouvant se déplacer l'un par rapport à l'autre comprenant un élément creux portant une règle gradué, fendu dans la direction longitudinale et fermé de manière étanche par des éléments d'étanchéité, et une unité de lecture qui lit la règle graduée, l'élément creux étant fixé sur l'un des objets pouvant se déplacer l'un par rapport l'autre, et l'unité de lecture étant montée sur l'autre objet au moyen d'un entraîneur en forme de lame qui pénètre dans la fente longitudinale, caractérisé en ce qu'une dépression est créée à l'intérieur de l'élément creux (H).

2. Dispositif de mesure de position étanche selon la revendication 1 caractérisé en ce que l'élément creux (H) présente au moins un orifice d'aspiration (44), qui est relié par des conduites (46) à une source de dépression (48).

3. Dispositif de mesure de position étanche selon la revendication 1 caractérisé en ce que l'entraîneur (1, 12) présente des orifices d'aspiration (4, 5; $S_1$, $S_2$) à ses extrémités frontales qui se rejoignent en forme de lame (1a, 1b; 12a, 12b).

4. Dispositif de mesure de position étanche selon la revendication 3 caractérisé en ce que les orifices d'aspiration (4, 5; $S_1$, $S_2$) de l'entraîneur (1, 12) sont reliés par des conduits (6, 7; 16, 17) à une source de dépression (8).

5. Dispositif de mesure de position étanche selon la revendication 3 caractérisé en ce que l'entraîneur (12) est constitué d'au moins deux plaques (14, 15) qui forment des fentes ($S_1$, $S_2$) à leurs extrémités frontales qui se rejoignent en forme de lame (12a, 12b).

FIG. 1

FIG. 2

FIG. 3

FIG.4

FIG.5